# EUROPEAN PATENT APPLICATION

(11) **EP 3 135 481 A1**
(43) Date of publication of application: **01.03.2017**
(21) Application number: 16180622.9
(22) Date of filing: 21.07.2016
(51) Int. Cl.: B32B 17/06

(54) **A TEMPERED GLASS PROTECTIVE FILM WITH A PATTERN IN A VISIBLE AREA**

(30) Priority: 21.08.2015 CN 201520638937 U
(71) Applicant: Meng, Chen, Dongguan Guangdong 523690 (CN); BDM Innovative GmbH, 81677 München (DE)
(72) Inventor: Meng, Chen, Dongguan, Guangdong 523690 (CN)
(74) Representative: Zimmermann & Partner Patentanwälte mbB

(57) **Abstract**

The present utility model relates to a field of photoelectric display technology, and in particular, relates to a tempered glass protective film with a pattern in a visible area. The film comprises a main film body attached on the screen body of the display screen. The main film body comprises a tempered glass layer, in which a pattern layer disappearing or appearing according to the illumination intensity is provided, and the pattern layer is located in the display area of the screen body of the display screen. By providing a pattern layer disappearing or appearing according to the illumination intensity, after the protective layer is attached on the screen of the electronic product, the pattern or text formed by the pattern layer disappears when the screen lights up, in order to guarantee the normal use of the electronic product; and the pattern or text re-appears when the screen is dimmed or off, in order to prevent from blocking the screen due to the setting of the pattern layer. Thus, the protective film can not only protect the screen, but also have artistic effect without affecting the normal operation of the electronic product.

## Description

### TECHNICAL FIELD

The present utility model relates to a field of photoelectric display technology, and in particular, relates to a tempered glass protective film with a pattern in a visible area.

### BACKGROUND

It is well known that generally a protective film needs to be attached on a display screen body having smooth surfaces, in order to protect the display screen from being scratched by an external object. Taken a protective film attached on a digital electronic product (such as a mobile phone and a tablet computer) as an example, the protective film is generally a thin film of completely transparent PET material or ARM material. Except for preventing the screen body from being scratched and damaged, some attached films have a function of preventing static electricity and oil spots.

As the personalized needs of people increase and enriches, requirements for the electronic products no longer merely satisfy its practical applicability. Taken a commonly used mobile phone as an example, its function is no longer limited to communication, and the shape, decorative pattern, color or the like of the housing is used as a reference when people make a purchase. However, most of current protective films are in completely transparent forms, and if a pattern is provided on the protective film, the pattern may block the display area of the screen, thus affecting the normal use of the electronic product.

Therefore, there is a need for a protective film which can not only protect the screen, but also achieve an artistic effect without affecting the normal use of the product.

### SUMMARY

Aiming at the deficiencies of the above prior art, an object of the present utility model is to provide a tempered glass protective film with a pattern in a visible area, which has a simple structure, and a significant protection function and artistic effect, and in which the pattern disappears when the screen lights up, and appears when the screen is dimmed.

To achieve the above object, the present utility model adopts the following technical solutions:

A tempered glass protective film with a pattern in a visible area comprises a main film body attached on a screen body of a display screen. The main film body comprises a tempered glass layer, in which a pattern layer disappearing or appearing according to the illumination intensity is provided, and the pattern layer is located in a display area of the screen body of the display screen.

Preferably, the pattern layer is made up of photosensitive ink, an ultrathin electroplating layer or a colored photosensitive thin film.

Preferably, the pattern layer has a thickness of no more than 0.01mm.

Preferably, a phosphor layer is further formed between an upper and lower surface of the pattern layer and the tempered glass layer.

With the above technical solution, the present utility model may use the characteristics of the photosensitive ink when attached on a screen of an electronic product, so that the photosensitive ink of the protective film automatically disappears when the screen lights up, in order to cause the pattern or text formed thereby to disappear, and guarantee the normal use of the electronic product; and so that the photosensitive ink automatically appears when the screen is dimmed or off, in order to cause the pattern or text to re-appear. The pattern layer may adopt characters, scenery, text and the like according to actual situations, in order to achieve a lifelike display effect of the screen. Thus, the protective film can not only protect the screen, but also achieve an artistic effect without affecting the normal operation of the electronic product. Besides, the protective film has a simple structure, very high practical value and marketing value.

### BRIEF DESCRIPTION OF THE DRAWINGS

FIG. 1 is a schematic view of a planar structure of an embodiment of the present utility model.
FIG. 2 is a schematic view of an interfacial structure of an embodiment of the present utility model.

### DETAILED DESCRIPTION

Below, the embodiments of the present utility model are described in detail in conjunction with the figures. The present utility model can be implemented in many different ways which are defined and covered by the claims.

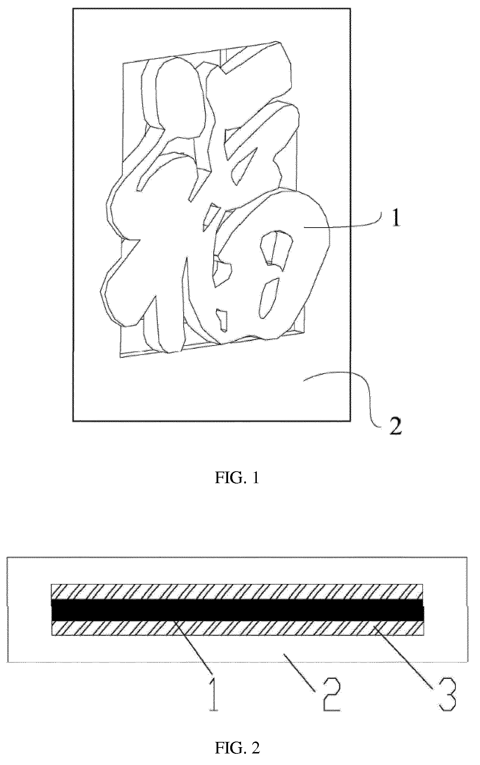

As shown in FIG. 1 and FIG. 2, a tempered glass protective film with a pattern in a visible area according to an embodiment comprises a main film body attached on a screen body of a display screen. The main film body of this embodiment comprises a tempered glass layer 2, in which a pattern layer 1 disappearing or appearing according to the illumination intensity of the background of the screen body of the display screen is provided, and the patter layer is located in the display area of the screen body of the display screen. The main film body may use any kind of available protective film (such as protective films having anti-bacterial, anti-scratch, and anti-oil spots property and the like) according to the particular situations. When the protective film is attached on the screen of the electronic product, with the characteristics of the pattern layer 1, the pattern or text of the protective film formed by the pattern layer 1 disappears when the screen lights up, in order to prevent from blocking the screen due to the setting of the pattern, and guarantee the normal use of the electronic product; and the pattern or text re-appears when the screen is dimmed or off. The pattern layer 1 of the present embodiment can be made up of a photosensitive material or other materials with similar functions. The pattern layer can also be formed by etching the interior of the tempered glass, in order to achieve the above effects of the pattern or text by changing its optical path. The pattern layer may adopt characters, scenery, text and the like according to actual situations so as to achieve a lifelike display effect of the screen. Thus, the protective film can not only protect the screen, but also achieve artistic effects without affecting the normal operation of the electronic product. The protective film of the embodiment can be applied to any products having a screen, such as mobile phones, tablet computers, televisions, cameras and so on.

In order to guarantee the display effects of the contents of the pattern layer 1, the pattern layer 1 of this embodiment can made up of photosensitive ink, an ultrathin electroplating layer, or a colored photosensitive thin film.

Further, in order to guarantee the display effects of the pattern and minimize the negative impacts of the pattern on the screen when the screen displays normally, the pattern layer 1 of this embodiment has a thickness of no more than 0.01mm.

Besides, a phosphor layer 3 may be formed between an upper and lower surfaces of the pattern layer 1 and the tempered glass layer 2, so that when the environment illumination intensity is relatively weak, the pattern layer 2 displays automatically by using the characteristics of the phosphor layer 3, in order to improve the aesthetic sense of the appearance of the electronic product.

The above contents are merely preferred embodiments of the present utility model, and thus not intended to limit the protection scope of the present utility model. On the same principle, any equivalent structure or process transformations made by the description and figures of the present utility model, or direct or indirect applications to other relevant technical fields are all included in the protection scope of the present utility model.

## Claims

1. A tempered glass protective film with a pattern in a visible area, which comprises a main film body attached on a display screen body, **characterized in that** the main film body comprises a tempered glass layer, in which a pattern layer disappearing and appearing according to the illumination intensity is provided, and the pattern layer is located in a display area of the display screen body.

2. The tempered glass protective film with a pattern in a visible area according to claim 1, **characterized in that** the pattern layer is made up of photosensitive ink, an ultrathin electroplating layer, or a colored photosensitive thin film.

3. The tempered glass protective film with a pattern in a visible area according to claim 2, **characterized in that** the pattern layer has a thickness of no more than 0.01mm.

4. The tempered glass protective film with a pattern in a visible area according to claim 2, **characterized in that** a phosphor layer is further formed between an upper and lower surface of the phosphor layer and the tempered glass layer.
